# EUROPÄISCHE PATENTANMELDUNG

(11) **EP 1 703 667 A1**
(43) Veröffentlichungstag der Anmeldung: **20.09.2006**
(21) Anmeldenummer: 05005589.6
(22) Anmeldetag: 15.03.2005
(51) Int. Cl.: H04L 12/24, G06F 17/30

(54) **Netzwerkmanagement unter Verwendung eines Master-Replica-Verfahrens**

(71) Anmelder: SIEMENS AKTIENGESELLSCHAFT, 80333 München (DE)
(72) Erfinder: Goerge, Jürgen, Dr., 81375 München (DE); Kleegrewe, Christian, 85386 Eching (DE); Olpp, Dieter, Dr., 81829 München (DE); Sanneck, Henning, Dr., 81667 München (DE); Sokol, Joachim, 82008 Unterhaching (DE); Southall, Alan, 81247 München (DE)

(57) **Zusammenfassung**

Die Erfindung betrifft ein Verfahren zum Betreiben eines hierarchischen Managementsystems, bei dem das Managementsystem zumindest einen Manager (EM) und einen Agenten (NE) umfasst. Der Manager (EM) und der Agent (NE) speichern Konfigurationsinformationen in jeweils einer Datenbank (MASTER, REPLICA). Erfindungsgemäß führt der Agent (NE) eine Änderung in seiner Datenbank (REPLICA) durch und sendet dem Manager (EM) eine Nachricht mit Informationen über die durchgeführte Änderung. Der Manager (EM) sendet dem Agenten (NE) daraufhin eine Nachricht mit einer positiven oder negativen Rückmeldung hinsichtlich der Änderung. Der Agent (NE) behält in seiner Datenbank (REPLICA) die Änderung nach Empfang einer positiven Rückmeldung des Managers (EM) bei und setzt die Änderung nach Empfang einer negativen Rückmeldung zurück. Weiterhin betrifft die Erfindung Einrichtungen zur Durchführung des Verfahrens.

## Beschreibung

Die Erfindung betrifft Verfahren zum Betreiben eines hierarchischen Managementsystems, welches zumindest einen Manager und einen Agenten umfasst, und in welchem der Manager und der Agent Konfigurationsinformationen in jeweils einer Datenbank speichern. Weiterhin betrifft die Erfindung Vorrichtungen zur Durchführung der Verfahren.

Gemäß den Prinzipien eines Managementnetzes, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine AgentenFunktion für die nächst höhere Ebene zu.

Manager starten zur Netzüberwachung und -kontrolle Operationen, indem sie sogenannte "requests" versenden, die von Agenten ausgeführt werden, und erhalten entsprechende Rückmeldungen, sogenannte "responses", von den Agenten. Elemente des Telekommunikationsnetzes, auch als Ressourcen des Telekommunikationsnetzes bezeichnet, die in einer TMN-Hierarchie die Rolle eines Agenten ausüben, erkennen relevante Ereignisse, sogenannte "events", wie z.B. Alarme, generieren entsprechende Mitteilungen, sogenannte "notifications", und übertragen sie in Form von Ereignismeldungen, sogenannten "event reports", an Manager, um ein effizientes Netzmanagement zu ermöglichen.

Das Netzwerkmanagement kann unter anderem das Fehlermanagement (Fault-Management) und/oder das Konfigurationsmanagement (Configuration Management) und/oder das Sicherheitsmanagement (Security-Management) und/oder das des Abrechnungsmanagement (Accounting-Management) und/oder das Leistungsmanagement (Performance-Management) umfassen. Durch das Netzwerkmanagement sollen geeignete Mechanismen zur Informationsverteilung und -verwaltung bereitgestellt werden, so dass bei Bedarf ein umfassendes Bild über den Netzzustand zur Verfügung steht und die einzelnen Objekte des Telekommunikationsnetzes effizient überwacht und konfiguriert werden können.

Die Manager-Agent-Kommunikation erfolgt über so genannte Management-Schnittstellen bzw. Manager-Agent-Schnittstellen, die in einer objekt-orientierten Umgebung durch ein Kommunikationsprotokoll, wie z.B. CMIP (Common Management Information Protocol) nach ITU-T X.711 oder CORBA (Common Object Request Broker Architecture), und durch ein Objektmodell gekennzeichnet sind. Objektmodelle dienen der Modellierung von Ressourcen des Telekommunikationsnetzes, wobei diese Ressourcen bei der Modellierung in Objektklassen eingeteilt werden.

Solche Schnittstellen gibt es beispielsweise zwischen einerseits der Netzwerkelementmanagement-Ebene (Network Element Management Level) und andererseits der Netzwerkelement-Ebene (Network Element Level). Ein Beispiel für Netzeinrichtungen dieser Manager-Agent-Schnittstelle stellen die Betriebs- und Wartungszentren (OMC: Operation and Maintenance Center) auf der Seite der Netzwerkelementmanagement-Ebene dar, sowie auf der Seite der Netzwerkelement-Ebene Einrichtungen wie z.B. Basisstationen des Basisstationssystems (BSS: Base Station System) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Funkzugangspunkte eines WLAN-Systems (WLAN: Wireless Local Area Network) beispielsweise gemäß einem der IEEE 802.11-Standards.

Management-Schnittstellen bzw. Manager-Agent-Schnittstellen existieren auch zwischen einerseits der Netzwerkmanagement-Ebene (Network Management Level) und andererseits der Netzwerkelementmanagement-Ebene. Ein Beispiel für Netzeinrichtungen zu dieser Manager-Agent-Schnittstelle stellen die Netzwerkmanagementzentren (NMC: Network Management Center) auf der Seite der Netzwerkmanagement-Ebene und die Betriebs- und Wartungszentren (OMC: Operation and Maintenance Center) auf der Seite der Netzwerkelementmanagement-Ebene z.B. im genannten GSM oder einem anderen Mobilfunk- oder Telekommunikationsnetz dar.

Der Erfindung liegt die Aufgabe zugrunde, effiziente Verfahren zum Betreiben eines Managementsystems sowie Vorrichtungen zur Durchführung der Verfahren aufzuzeigen.

Diese Aufgabe wird durch ein Verfahren mit den Merkmalen des Anspruchs 1, sowie durch ein Verfahren und Vorrichtungen mit Merkmalen von nebengeordneten Ansprüchen gelöst. Vorteilhafte Ausgestaltungen und Weiterbildungen sind Gegenstand von Unteransprüchen.

Bei dem ersten erfindungsgemäßen Verfahren zum Betreiben eines hierarchischen Managementsystems, bei dem das Managementsystem zumindest einen Manager und einen Agenten umfasst, speichern der Manager und der Agent Konfigurationsinformationen in jeweils einer Datenbank. Der Agent führt eine Änderung in seiner Datenbank durch und sendet dem Manager eine Nachricht mit Informationen über die durchgeführte Änderung. Der Manager sendet daraufhin dem Agenten eine Nachricht mit einer positiven oder negativen Rückmeldung hinsichtlich der Änderung. Der Agent behält in seiner Datenbank die Änderung nach Empfang einer positiven Rückmeldung bei, nach Empfang einer negativen Rückmeldung setzt er die Änderung zurück.

Sowohl der Manager als auch der Agent verfügen über eine Datenbank, welche zumindest zur Speicherung von Konfigurationsinformationen verwendet wird. Vorzugsweise betreffen die von dem Manager und dem Agenten gespeicherten Konfigurationsinformationen den Agenten betreffende Konfigurationsinformationen. Die gespeicherten Konfigurationsinformationen können sich jedoch auch auf andere Einrichtungen beziehen. Beispiele für Konfigurationsinformationen sind Handoverparameter oder Transportparameter wie IP-Adressen und Routen.

Der Agent führt eine Änderung in seiner Datenbank durch, wobei er hierzu vorzugsweise nicht von dem Manager aufgefordert wird. Er informiert den Manager über die von ihm durchgeführte Änderung. Bei der von dem Agenten durchgeführten Änderung handelt es sich insofern um eine vorläufige Änderung, als sie der Zustimmung des Managers bedarf. Denn der Manager sendet auf den Empfang der Nachricht des Agenten hin eine Nachricht mit einer positiven oder negativen Rückmeldung hinsichtlich der Änderung an den Agenten. Empfängt der Agent eine negative Rückmeldung, so setzt er die von ihm durchgeführte Änderung zurück, dass heißt er führt den Zustand seiner Datenbank herbei, welcher vor der Durchführung der vorläufigen Änderung bestand. Empfängt der Agent eine positive Rückmeldung hinsichtlich der Änderung, so behält er die Änderung bei, dass heißt nach Empfang einer positiven Rückmeldung muss der Agent keine Änderung hinsichtlich der Konfigurationsdaten seiner Datenbank vornehmen.

Bei dem betrachteten Managementsystem handelt es sich vorzugsweise um ein Managementsystem eines Mobilfunkkommunikationssystems, der Manager kann in diesem Fall ein OMC (Operation and Maintenance Center) und der Agent einer Netzeinrichtung, wie zum Beispiel eine Basisstation, sein. Neben den betrachteten zwei Hierarchieebenen, welchen der Manager und der Agent angehören, können weitere Hierarchieebenen des Managementsystems vorhanden sein.

Besonders vorteilhaft ist es, wenn der Manager nach Empfang der Nachricht mit Informationen über die durchgeführte Änderung bei Versendung einer positiven Rückmeldung die Änderung in seiner Datenbank durchführt. In diesem Fall führt der Manager auf die Information des Agenten hin, dass dieser eine bestimmte Änderung in seiner Datenbank durchgeführt hat, die gleiche Änderung in der eigenen Datenbank durch. Auf diese Weise kann eine Synchronisierung zwischen den Datenbanken des Managers und des Agenten aufrechterhalten bzw. hergestellt werden.

In Ausgestaltung der Erfindung bezieht sich die positive Rückmeldung des Managers lediglich auf einen Teil der Änderung, und der Agent behält in seiner Datenbank nach Empfang dieser partiellen positiven Rückmeldung den Teil der Änderung bei und setzt den restlichen Teil der Änderung zurück. Weiterhin führt der Manager bei Versendung einer positiven Rückmeldung lediglich den Teil der Änderung in seiner Datenbank durch. Der Manager stimmt nicht der vollständigen von dem Agenten durchgeführten Änderung zu, sondern lediglich einem Teil dieser Änderung. Daher muss der Agent aufgrund des Empfangs der partiellen positiven Rückmeldung denjenigen Teil, auf den sich die positive Rückmeldung bezieht, beibehalten, und die restliche von ihm durchgeführte Änderung rückgängig machen. Der Manager führt nur denjenigen Teil der Änderung in seiner Datenbank durch, welchem er gemäß seiner partiellen positiven Rückmeldung zustimmt.

In Weiterbildung der Erfindung speichert der Agent Informationen über den vor der Änderung vorliegenden Zustand seiner Datenbank. Diese Informationen sind vorzugsweise so beschaffen, dass sie dem Agenten die Zurücksetzung ermöglichen, wenn von dem Manager eine negative Rückmeldung hinsichtlich der ganzen Änderung oder eines Teils der Änderungen empfängt.

Besonders vorteilhaft ist es, wenn sich die Informationen über die Änderung ausschließlich auch von der Änderung betroffene Teile der Datenbank des Agenten beziehen. Über nicht von der Änderung betroffene Teile der Datenbank des Agenten erfolgt somit keine Information in der Nachricht des Agenten, mit welcher er den Manager über die von ihm durchgeführte Änderung benachrichtigt.

In Weiterbildung der Erfindung sendet der Agent die Nachricht mit Informationen über die Änderung unmittelbar nach der Durchführung der Änderung, oder nach einer Widerherstellung der Verbindung zwischen dem Manager und dem Agent, oder nach dem Ablauf einer bestimmten Zeitspanne. Bei der Versendung nach der Wiederherstellung der Verbindung oder nach dem Ablauf einer bestimmten Zeitspanne können insbesondere Informationen über eine Mehrzahl durchgeführter Änderungen gesendet werden, so zum Beispiel über alle Änderungen, welche der Agent in seiner Datenbank seit einem Abbruch der Verbindung zwischen dem Manager und dem Agent oder seit der letzten Benachrichtigung über eine erfolgte Änderung durchgeführt hat.

Bei dem zweiten erfindungsgemäßen Verfahren zum Betreiben eines hierarchischen Managementsystems, bei dem das Managementsystem zumindest einen Manager und einen Agenten umfasst, speichern der Manager und der Agent Konfigurationsinformationen in jeweils einer Datenbank. Der Manager sendet dem Agenten eine Nachricht mit Informationen über eine in der Datenbank des Agenten durchzuführende Änderung. Daraufhin sendet der Agent dem Manager eine Nachricht mit einer positiven oder negativen Rückmeldung hinsichtlich der Durchführung der Änderung. Der Manager führt nach Empfang einer positiven Rückmeldung die Änderung in seiner Datenbank durch.

Der Manager weist den Agenten an, eine bestimmte Änderung in seiner Datenbank durchzuführen. Der Agent informiert den Manager über die Durchführung der Änderung mit einer positiven oder negativen Rückmeldung. So kann diese Rückmeldung beispielsweise besagen, dass die Änderung vollständig durchgeführt wurde, dass sie teilweise durchgeführt wurde, oder dass sie überhaupt nicht durchgeführt wurde. Der Manager reagiert auf diese Rückmeldung des Agenten, in dem er seine Datenbank abhängig von der Rückmeldung des Agenten anpasst. Nach Empfang einer negativen Rückmeldung führt der Manager die Änderung in seiner Datenbank nicht durch. Eine Änderung in der Datenbank des Managers erfolgt somit nur, wenn der Agent bestätigt, dass er diese Änderung bereits durchgeführt hat.

Vorteilhaft ist es, wenn sich die positive Rückmeldung des Agenten lediglich auf einen Teil der Änderung bezieht und der Manager nach Empfang der positiven Rückmeldung lediglich den von dem Agenten durchgeführten Teil der Änderung in seiner Datenbank durchführt. Dies ermöglicht es auch bei partieller Durchführung der Änderung durch den Agenten, einen synchronisierten Zustand zwischen der Datenbank des Managers und des Agenten aufrecht zu erhalten.

In Weiterbildung der Erfindung beziehen sich die Informationen über die durchzuführende Änderung ausschließlich auf von der Änderung betroffene Teile der Datenbank des Agenten. Der Manager informiert den Agenten somit nicht explizit darüber, dass nicht von der Änderung betroffene Teile seiner Datenbank nicht zu verändern sind.

Es handelt sich bei dem beschriebenen Verfahren vorzugsweise um ein Master-Replica-Verfahren. Bei der Durchführung von Änderungen in der Datenbank des Managers und/der des Agenten handelt es sich vorzugsweise jeweils um eine Transaktion.

Einer vorteilhaften Ausgestaltung der Erfindung gemäß umfassen der Manager und der Agent jeweils einen ersten und einen zweiten Bestandteil, wobei der erste Bestandteil zuständig für die Durchführung von Netzwerkmanagementfunktionen und unabhängig von Datenabgleichsfunktionen ist, und der zweite Bestandteil zuständig für die Durchführung von Datenabgleichsfunktionen und unabhängig von Netzwerkmanagementfunktionen ist. Die oben beschriebenen Schritte der Synchronisierung zwischen den Datenbanken des Managers und des Agenten sind hierbei Bestandteil der Datenabgleichsfunktion. Die Mehrteilung des Managers und des Agenten in zumindest einen ersten und einen zweiten Bestandteil ermöglicht einen modularen Aufbau der Netzwerkmanagementeinrichtungen.

Einer Weiterbildung der Erfindung gemäß wird das Verfahren in Bezug auf eine Mehrzahl von Agenten durchgeführt. Vorzugsweise weist die Datenbank des Managers eine Verknüpfung zwischen ersten Konfigurationsinformationen und zweiten Konfigurationsinformationen auf, und der Manager empfängt eine Nachricht mit Informationen über eine Änderung der ersten Konfigurationsinformationen von einem ersten Agent oder er sendet eine Nachricht mit Informationen über eine durchzuführende Änderung betreffend die ersten Konfigurationsinformationen an den ersten Agenten, und der Manager sendet aufgrund der Verknüpfung zwischen den ersten und den zweiten Konfigurationsinformationen eine Nachricht mit Informationen über eine durchzuführende Änderung betreffend die zweiten Konfigurationsinformationen an einen zweiten Agenten. Die Speicherung der Verknüpfung kann durch eine relationale Datenbank realisiert werden. Bei den ersten und den zweiten Konfigurationsinformationen kann es sich um gleichartige oder verschiedenartige Informationen handeln. Bei gleichartigen Informationen beispielsweise kann die Änderung eines bestimmten Attributes in der Datenbank eines ersten Agenten die Änderung des gleichen Attributes in der Datenbank eines zweiten Agenten bedingen.

Ein erster Manager für ein hierarchisches Managementsystem weist Mittel auf zum Empfangen und Verarbeiten einer Nachricht von dem Agent mit Informationen über eine in einer Datenbank zum Speichern von Konfigurationsinformationen des Agenten durchgeführte Änderung, sowie Mittel zum Erstellen und Versenden einer Nachricht an den Agent mit einer positiven oder negativen Rückmeldung hinsichtlich der Änderung, und Mittel zum Durchführen der Änderung in der Datenbank des Managers bei Versendung einer positiven Rückmeldung.

Eine erster erfindungsgemäßer Agent für ein hierarchisches Managementsystem weist Mittel auf zum Erstellen und Versenden einer Nachricht an den Manager mit Informationen über eine in der Datenbank des Agenten durchgeführte Änderung, sowie Mittel zum Empfangen und Verarbeiten einer Nachricht von dem Manager mit einer positiven oder negativen Rückmeldung hinsichtlich der Änderung, und Mittel zum Beibehalten der Änderung nach Empfang einer positiven Rückmeldung des Managers und zum Zurücksetzen der Änderung nach Empfang einer negativen Rückmeldung des Managers.

Ein zweiter erfindungsgemäßer Manager für ein hierarchisches Managementsystem weist Mittel auf zum Erstellen und Versenden einer Nachricht an den Agenten mit Informationen über eine in einer Datenbank zum Speichern von Konfigurationsinformationen des Agenten durchzuführende Änderung, sowie Mittel zum Empfangen und Verarbeiten einer Nachricht von dem Agent mit einer positiven oder negativen Rückmeldung hinsichtlich der Durchführung der Änderung, und Mittel zum Durchführen der Änderung in der Datenbank des Managers nach Empfang einer positiven Rückmeldung.

Ein zweiter erfindungsgemäßer Agent für ein hierarchisches Managementsystem weist Mittel auf zum Empfangen und Verarbeiten einer Nachricht von dem Manager mit Informationen über eine in der Datenbank des Agenten durchzuführende Änderung, und Mittel zum Erstellen und Versenden einer Nachricht an den Manager mit einer positiven oder negativen Rückmeldung hinsichtlich der Durchführung der Änderung.

Sowohl der erfindungsgemäße Manager als auch der erfindungsgemäße Agent eignen sich insbesondere zur Durchführung des erfindungsgemäßen Verfahrens, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt aus einem Managementsystem,
- Figur 2:: ein erstes Ablaufdiagramm zum erfindungsgemäßen Verfahren,
- Figur 3:: ein zweites Ablaufdiagramm zum erfindungsgemäßen Verfahren.

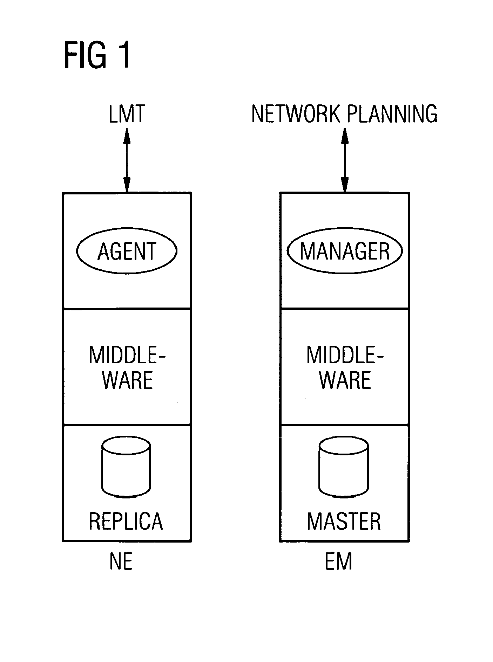

Der in Figur 1 dargestellte Ausschnitt aus einem Managementsystem eines Kommunikationssystems umfasst den Agenten NE (NE: Network Element) und den Manager EM (EM: Element Manager). Bei dem betrachteten hierarchischen Managementsystem kann es sich z.B. um das Managementsystem eines Mobilfunkkommunikationssystems der zweiten oder dritten Generation handeln, oder um ein Managementsystem eines Festnetzes z.B. nach einem ITU oder IETF Standard. Der Agent NE ist Bestandteil der untersten Hierarchieebene des Managementsystems, während der Manager Bestandteil der nächst höheren Hierarchieebene ist, welche über derjenigen des Agenten NE angeordnet ist.

Der Agent NE weist eine Datenbank REPLICA zur Speicherung seiner Konfigurationsdaten auf. Auch der Manager EM speichert die von dem Agenten NE gespeicherten Konfigurationsdaten, wobei diese Speicherung in der Datenbank MASTER erfolgt. Zur Synchronisierung bzw. zum Datenabgleich zwischen den Datenbanken MASTER und REPLICA wird ein Master-Replica-Verfahren angewandt. Master-Replica-Datenbanken werden z.B. beschrieben in:
Solid Technologies: Smartflow,
   http://www.solidtech.com/products/data distr.html
Oracle 9i: Advanced Replication, Release 2 (9.2), March 2002,
   http://download-uk.oracle.com/docs/cd/B10501 01/server.920/a96567.pdf

Der Agent NE ist mit einem lokalen Wartungsterminal LMT (Local Maintenance Terminal) verbunden, welches Zugriff auf die Datenbank REPLICA hat und somit Einträge der Datenbank REPLICA verändern kann. Der Manager EM ist mit einer weiteren, ihm übergeordneten Hierarchieebene NETWORK PLANNING verbunden, welche ihm im Rahmen der Netzwerkplanung u.a. Anweisungen zur Konfiguration des Agenten NE erteilt.

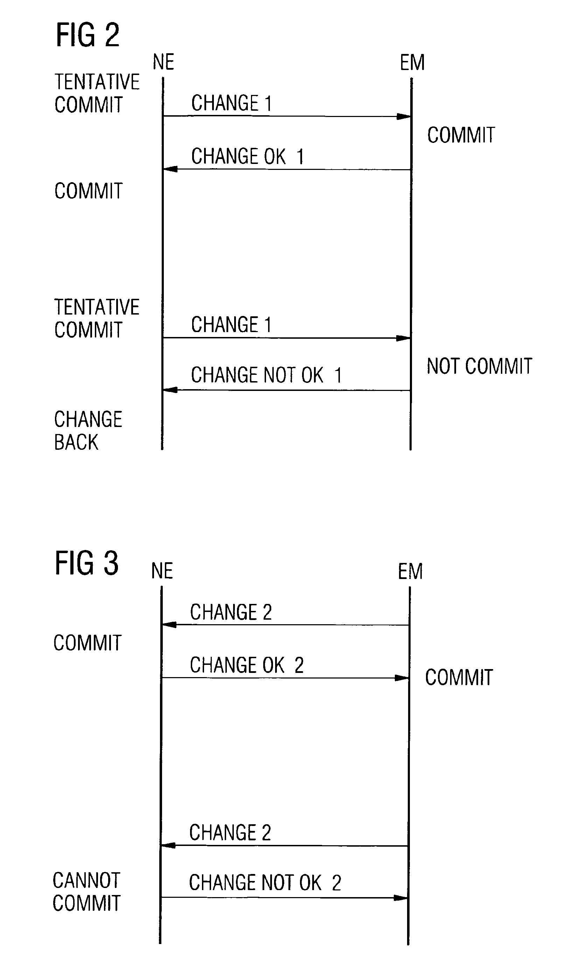

In Figur 2 sind die Verfahrensschritte dargestellt, welche sich aus einer Veränderung der Konfigurationsdaten der Datenbank REPLICA ergeben, wenn diese Änderung durch das lokale Wartungsterminal LMT initiiert wird. In dem Verfahrensschritt TENTATIVE COMMIT werden die betreffenden Konfigurationsdaten in der Datenbank REPLICA des Agenten NE durch das lokale Wartungsterminal LMT geändert. Hierbei handelt es sich wie im folgenden beschrieben lediglich um eine vorläufige Änderung, welche der Zustimmung des Managers EM bedarf. Eine Änderung der Konfigurationsdaten kann aus dem Hinzufügen eines oder mehrere Werte und/oder aus dem Löschen eines oder mehrere Werte und/oder aus dem Überschreiben eines oder mehrere Werte bestehen. Mit der Nachricht CHANGE 1 informiert der Agent NE den Manager EM über die erfolgte Änderung. Hierbei werden nicht die gesamten Konfigurationsdaten der Datenbank REPLICA des Agenten NE übertragen, sondern lediglich die Veränderungen, indem z.B. eine Angabe eines veränderten Attributs in Kombination mit dem neuen Wert des Attributs erfolgt. Die Informationen der Nachricht CHANGE 1 genügen, um zu erkennen, welche Änderung die Datenbank REPLICA erfahren hat; die Teile der Datenbank REPLICA, welche nicht von der Änderung betroffen sind, werden nicht übertragen.

Der Manager EM entscheidet auf den Empfang der Nachricht CHANGE 1 hin, ob die Änderungen der Datenbank REPLICA aufrechterhalten werden sollen oder nicht. Hierbei kann z.B. berücksichtigt werden, ob die von dem Agenten NE vorgenommenen Änderungen zu Vorgaben der Hierarchieebene NETWORK PLANNING passen oder in Konflikt mit diesen stehen. Beispielsweise kann der Manager EM zwischenzeitlich eine Änderung der Konfigurationsdaten planen, welche keine Konsistenz mit der vorläufigen Änderung des Agenten NE aufweist, so dass die vorläufige Änderung der Datenbank REPLICA rückgängig zu machen ist. In Figur 2 ist im oberen Teil der Fall dargestellt, dass der Manager EM entscheidet, dass die von dem Agenten vorläufig durchgeführten Änderungen der Datenbank REPLICA beibehalten werden sollen. Der Manager EM überarbeitet daher in dem Schritt COMMIT seine Datenbank MASTER, indem er die Änderungen der Datenbank REPLICA in die Datenbank MASTER übernimmt. Ab diesem Zeitpunkt sind die Datenbanken REPLICA und MASTER in Übereinstimmung. Der Manager EM informiert den Agenten NE mittels der Nachricht CHANGE OK 1 darüber, dass die vorläufig vorgenommenen Änderungen der Datenbank REPLICA aufrechtzuerhalten sind. In dem Verfahrensschritt COMMIT des Agenten NE werden die vorläufigen Änderungen der Datenbank REPLICA zu endgültigen Änderungen.

Im unteren Teil der Figur 2 ist der Fall dargestellt, dass der Manager nach Empfang der Nachricht CHANGE 1 entscheidet, dass die vorläufig vorgenommenen Änderungen der Datenbank REPLICA nicht aufrechterhalten werden sollen. Gemäß dem Verfahrensschritt NOT COMMIT erfolgt daher keine Anpassung der Datenbank MASTER an die vorläufig vorgenommenen Änderungen der Datenbank REPLICA. Der Manager EM informiert den Agenten NE mit der Nachricht CHANGE NOT OK 1 darüber, dass die vorläufig vorgenommenen Änderungen rückgängig zu machen sind. In dem Verfahrensschritt CHANGE BACK werden daher die vorläufigen Änderungen der Datenbank REPLICA durch den Agenten NE wieder rückgängig gemacht. Der Inhalt der Datenbank REPLICA entspricht nach dem Verfahrensschritt CHANGE BACK dem Zustand vor der vorläufigen Änderung des Schrittes TENTATIVE COMMIT.

Der Agent NE ist somit befugt, ohne Anweisung des Managers EM Änderungen in seiner Datenbank REPLICA durchzuführen. Bei diesen Änderungen handelt es sich jedoch um vorläufige Änderungen, welche ausschließlich durch Zustimmung des Managers EM zu endgültigen Änderungen werden. Eine vorläufige und eine endgültige Änderung unterscheiden sich dadurch, dass es bei einer vorläufigen Änderung grundsätzlich möglich ist, zu dem Zustand vor der Änderung zurückzukehren. D.h. bei einer vorläufigen Änderung werden Informationen über den Zustand vor der Änderung gespeichert. Dem Manager EM obliegt die alleinige Entscheidungsbefugnis, die vorläufige Änderung anzunehmen, in welchem Fall er die gleiche Änderung in Bezug auf seine Datenbank MASTER durchführt, oder sie abzulehnen, in welchem Fall er seine Datenbank MASTER unverändert lässt.

Dass der Agent NE das Veränderung der Datenbank REPLICA initiieren kann, wie in Figur 2 dargestellt, ist insbesondere aufgrund der Tatsache vorteilhaft, dass die Verbindung zwischen dem Agent NE und dem Manager EM oftmals unzuverlässig ist. So kann die Verbindung von Zeit zu Zeit durch eine Störung unterbrochen sein. Wäre die Änderung der Datenbank REPLICA ausschließlich durch den Manager EM initiierbar, so könnte während einer Unterbrechung der Kommunikation zwischen dem Agent NE und dem Manager EM keine Veränderung der Datenbank REPLICA durchgeführt werden. Dies würde bedeuten, dass der Agent NE im laufenden Betrieb des Kommunikationssystems unter Umständen nicht mehr korrekt arbeiten kann. Um dies zu verhindern, ist es vorteilhaft, wenn der Agent NE "Herr seiner eigenen Daten" ist. Nimmt der Agent NE eine Änderung der Daten während einer Unterbrechung der Kommunikation zwischen dem Agent NE und dem Manager EM vor, so teilt er dies dem Manager gemäß dem in Figur 2 dargestellten Verfahren nach Wiederherstellung der Kommunikation mit.

Figur 3 zeigt die Verfahrensschritte des Datenabgleichs zwischen den beiden Datenbanken REPLICA und MASTER für den Fall, dass die Manager EM eine Änderung der Datenbank REPLICA initiiert. Mit der Nachricht CHANGE 2 weist der Manager EM den Agenten NE an, bestimmte Änderungen der Datenbank REPLICA durchzuführen. Wie bereits im Hinblick auf die Nachricht CHANGE 1 erläutert, enthält die Nachricht CHANGE 2 nicht alle Konfigurationsdaten der Datenbank REPLICA des Agenten NE, sondern lediglich die von der Änderung betroffenen. Der Agent NE führt die Änderungen in dem Verfahrensschritt COMMIT durch und informiert den Manager EM mit der Nachricht CHANGE OK 2 über den erfolgreichen Verlauf der Änderung der Datenbank REPLICA. Nach Empfang der Nachricht CHANGE OK 2 führt der Manager EM in dem Verfahrensschritt COMMIT die gleiche Änderung in seiner Datenbank MASTER durch.

Im unteren Teil der Figur 3 ist der Fall dargestellt, dass der Agent NE die vom Manager EM mittels der Nachricht CHANGE 2 angeforderten Änderungen der Datenbank REPLICA nicht durchführen kann. Dies kann z.B. dadurch entstehen, dass die vom Manager EM geforderten Änderungen zu Inkonsistenzen der Konfigurationsdaten der Datenbank REPLICA führen würde. Im Verfahrensschritt CANNOT COMMIT führt der Agent NE die Änderungen daher nicht durch. Er informiert den Manager EM mit der Nachricht CHANGE NOT OK 2 über die gescheiterte Änderung der Datenbank REPLICA. Im Gegensatz zum oberen Teil der Figur 3 ändert der Manager EM seine Datenbank MASTER nach Empfang der Nachricht CHANGE NOT OK 2 nicht.

Weiterhin ist es möglich, dass der Agent NE im Verfahrensschritt CANNOT COMMIT lediglich einen Teil der vom Manager vorgegebenen Änderungen durchführen kann. In diesem Fall informiert er den Manager EM mittels der Nachricht CHANGE NOT OK 2 darüber, welche Änderungen durchgeführt wurden. Der Manager EM kann daraufhin seine Datenbank MASTER den von dem Agenten NE durchgeführten Änderungen anpassen oder den Agenten NE anweisen, die Änderungen der Datenbank REPLICA rückgängig zu machen.

Während im Fall der vom Agenten NE initiierten Änderung der Datenbank REPLICA der Manager EM die volle Entscheidungsbefugnis darüber hat, ob die vorläufige Änderung aufrechterhalten werden soll oder nicht, liegt eine solche Entscheidungsbefugnis bei dem Agenten NE bei einer von dem Manager EM angeforderten Änderung nicht vor. Vielmehr muss der Agent NE die vom Manager geforderte Änderung durchführen, sofern ihm dies möglich ist. Die Durchführung einer Änderung ist dem Agent NE z.B. dann nicht möglich, wenn hierdurch lokale Inkonsistenzen, d.h. Inkonsistenzen der Datenbank REPLICA, erzeugt würden. Allerdings kann der Manager EM den Agenten NE zwingen, den inkonsistenten Zustand einzustellen. Auch in dem Fall, dass eine lokale Hardware des Agenten NE aktuell nicht zugänglich ist, kann der Agent NE gegebenenfalls eine von dem Manager EM geforderte Änderung nicht durchführen.

Der Manager EM hingegen kann bei der Entscheidung darüber, ob eine von dem Agenten NE durchgeführte vorläufige Änderung aufrechterhalten werden soll, verschiedene frei von ihm bestimmbare Entscheidungskriterien hinzuziehen.

Gemäß den Figuren 2 und 3 führt der Manager eine Änderung der Datenbank MASTER nur dann aus, wenn ihm bekannt ist, dass diese Änderung in der Datenbank REPLICA bereits durchgeführt wurde. Die Datenbank MASTER gibt somit grundsätzlich den stabilen, endgültigen Zustand der Daten an. Ein Zurücksetzen des Zustandes der Datenbank MASTER ist daher im Gegensatz zur Datenbank REPLICA nicht nötig.

Ereignis- oder zeitgesteuert können von dem Manager EM an den Agenten NE Refresh-Nachrichten gesendet werden, welche den Zustand der Datenbank MASTER angeben. Die Refresh-Nachrichten beziehen sich nicht auf eine durchzuführende Änderung, sondern geben den gesamten für den Agenten NE relevanten Inhalt der Datenbank MASTER an. Somit können die Refresh-Nachrichten zur Bestätigung des Inhaltes der Datenbank REPLICA eingesetzt werden. Alternativ können sie auch zum Überschreiben des Inhaltes der Datenbank REPLICA eingesetzt werden, indem der Agent NE den aktuellen Inhalt der Datenbank REPLICA durch den in einer Refresh-Nachricht enthaltenen Inhalt ersetzt.

Um einen effizienten Abgleich der Inhalte der Datenbanken REPLICA und MASTER zu gewährleisten, werden Transaktionen eingesetzt. Eine Transaktion entspricht hierbei dem Übergang von einem definierten Ausgangszustand in einen definierten Endzustand. In Bezug auf vorläufige Änderungen des Agenten NE bedeutet dies, dass der Agent die vorläufige Änderung gemäß einer Transaktion durchführt und in dem Fall, dass er vom Manager EM aufgefordert wird, die Änderung rückgängig zu machen, von dem Endzustand der Transaktion zu dem Ausgangszustand der Transaktion zurückehren kann.

Gemäß Figur 1 bestehen der Agent NE und der Manager EM jeweils aus einem die Datenbanken REPLICA bzw. MASTER enthaltenden Teil, aus einem Mittelteil MIDDLEWARE und aus einem Teil AGENT bzw. MANAGER. Hierbei sind die die Datenbanken REPLICA bzw. MASTER enthaltenden Teile verantwortlich für den beschriebenen Ablauf des Datenmanagements unter Verwendung des Master-Replica-Mechanismus, und die Teile AGENT bzw. MANAGER für die eigentlichen Aufgaben des Netzwerkmanagements. Während somit die die Datenbanken REPLICA bzw. MASTER enthaltenden Teile unabhängig von den Netzwerkmanagementfunktionen und die Teile AGENT bzw. MANAGER unabhängig von den Datenmanagementfunktionen sind, existiert jeweils der Mittelteil MIDDLEWARE, welcher sowohl von den Netzwerkmanagementfunktionen als auch von den Datenmanagementfunktionen abhängig ist. Die Mittelteile MIDDLEWARE dienen der Adaption zwischen den funktional unterschiedlichen Bereichen des Netzwerkmanagements und des Datenmanagements.

Der Aufbau der Netzwerkmanagementeinrichtungen gemäß Figur 1 entspricht einer modularen Struktur. Diese ermöglicht es, dass effiziente Verfahren zum Datenmanagement und zum Netzwerkmanagement unabhängig voneinander entwickelt und verbessert werden können. Insbesondere kann hierdurch zu Zwecken des Betreibens eines Netzwerkmanagementsystems auf bekannte und bewährte Verfahren zum Management von Datenbanken zurückgegriffen werden, ohne dass derartige Verfahren für das Netzwerkmanagement eigens entwickelt werden müssen. Die Komplexitäten des Datenmanagements, wie z.B. Fragmentation von Daten, Replikation von Daten, Synchronisation zwischen Datenbanken, Verwendung von Transaktionen, Kompression von Daten, und Auflösung von Konflikten, wird von dem eigentlichen Netzwerkmanagement ferngehalten. Daher sind wenige oder keine Anpassungen des im Rahmen des Netzwerkmanagement verwendeten Informationsmodells an das verwendete Datenmanagementverfahren nötig. Der Ablauf des Netzwerkmanagements und des Datenmanagements ist weitgehend unabhängig voneinander. Durch die Entkopplung der Funktionalitäten des Netzwerkmanagements und des Datenmanagements können diese jeweils die ihnen entsprechenden Aufgaben effizienter erfüllen.

Teilt der Agent NE dem Manager EM mit, dass er eine vorläufige Änderung der Datenbank REPLICA vorgenommen hat, oder teilt der Manager EM dem Agent NE mit, dass eine Änderung der Datenbank REPLICA durchzuführen ist, so werden jeweils nur die Delta-Informationen, d.h. die Änderungen in Bezug auf den aktuellen Zustand der Datenbank des jeweils anderen mitgeteilt. Gemäß dem Stand der Technik hingegen werden üblicherweise die vollständigen Konfigurationsdaten übertragen, d.h. der Agent NE übermittelt dem Manager EM die vollständige Datenbank REPLICA, und der Manager EM übermittelt dem Agent NE alle ihn betreffenden Konfigurationsdaten der Datenbank MASTER. Dadurch, dass bei dem erfindungsgemäßen Verfahren lediglich die Veränderungen übertragen werden, wird eine Einsparung von Übertragungsressourcen auf der Schnittstelle zwischen dem Agent NE und dem Manager EM bewirkt. Dies wirkt sich umso gravierender aus, je größer die Anzahl an Agenten ist, welche dem Manager EM zugeordnet sind.

Da zur Information über erfolgte Änderungen der Datenbank REPLICA lediglich wenige Übertragungsressourcen benötigt werden, kann diese Information gesendet werden, sobald der Agent NE eine vorläufige Änderung vorgenommen hat. Würde der gesamte Inhalt der Datenbank REPLICA von dem Agent NE an den Manager EM übertragen, würde hingegen diese Übertragung aufgrund des großen Aufwandes an Übertragungsressourcen seltener, in der Regel zu vorbestimmten Zeitpunkten, stattfinden. Hierdurch kann es jedoch dazu kommen, dass sich die Inhalte der Datenbanken REPLICA und MASTER in Bezug auf die Konfigurationsdaten des Agenten NE für einige Zeit voneinander unterscheiden, d.h. dass der Agent NE und der Manager EM eine unterschiedliche Sicht auf die Konfigurationsdaten haben. Dies kann z.B. dazu führen, dass der Manager EM aufgrund seiner Unkenntnis einer durch den Agenten NE durchgeführten Änderung der Datenbank REPLICA diese ignoriert oder überschreibt. Eine Divergenz zwischen dem aktuellen Inhalt der Datenbank REPLICA und den von dem Manager EM in der Datenbank MASTER gespeicherten Konfigurationsdaten schränkt die Qualität des Netzwerkmanagements ein, da der Manager EM in diesem Fall bei Managemententscheidungen von einem aktuell nicht zutreffenden Zustand seines Agenten NE ausgeht.

Funktioniert die Verbindung zwischen dem Agent NE und dem Manager EM ordnungsgemäß, so kann der Agent NE den Manager EM nach der Durchführung einer vorläufigen Änderung in der Datenbank REPLICA umgehend informieren. Es ist jedoch auch möglich, dass die Informationen über vorläufige Änderungen von dem Agenten NE gespeichert werden und erst nach Ablauf einer bestimmten Zeitspanne oder nachdem eine bestimmte Anzahl an Änderungen vorliegen, an den Manager EM gesendet werden. Ist die Kommunikation zwischen dem Agent NE und dem Manager EM gestört bzw. unterbrochen, so können die während der Störung von dem Agent NE durchgeführten vorläufigen Änderungen gespeichert und nach Beendigung der Störung an den Manager EM gesendet werden.

Die Verwendung eines Master-Replica-Verfahrens im Rahmen des Konfigurationsmanagements führt zu einem zuverlässigen Betrieb des Netzwerkmanagementsystems: das beschriebene Verfahren des Datenabgleichs ermöglicht eine Auflösung von Konflikten, welche dadurch entstehen, dass Konfigurationsdaten unabhängig voneinander durch den Agenten NE und durch den Manager EM aktualisiert werden; aufgrund der Verwendung von Transaktionen wird sichergestellt, dass sich die Datenbanken des Agenten und des Managers auf einen konsistenten, widerspruchsfreien Zustand hinentwickeln, ein inkonsistenter Zustand hingegen würde den ordnungsgemäßen Betrieb des Kommunikationssystems gefährden.

Während das erfindungsgemäße Verfahren in Bezug auf den Datenabgleich zwischen einer Master-Datenbank und einer Replica-Datenbank beschrieben wurde, ist es vorteilhaft auch auf das Vorliegen einer Vielzahl an Replica-Datenbanken anwendbar. Insbesondere ist es möglich, dass die höhere Hierarchieebene NETWORK PLANNING eine Datenbank aufweist, welche eine Replica-Datenbank zu der Master-Datenbank des Managers EM darstellt. Sind mehrere Replica-Datenbanken vorhanden, können Abhängigkeiten zwischen den Daten der verschiedenen Replica-Datenbanken berücksichtigt werden, wie im folgenden näher erläutert wird Es wird die Konstellation betrachtet, dass die Datenbank MASTER des Managers EM vorhanden ist, sowie eine Mehrzahl an Datenbanken REPLICA.

Den folgenden Ausführungen liegt die Überlegung zugrunde, dass verschiedene Datenklassen verschiedene Mechanismen zur Verteilung der Daten erfordern, um einen effizienten Austausch der Daten im Managementsystem zu ermöglichen. Es werden verschiedene Klassen von Konfigurationsdaten in Bezug auf die Interdependenzen von Konfigurationsdaten verschiedener Agenten betrachtet. Die folgenden Klassen werden eingeführt:
- Gemeinsame Daten: Diese Daten sind für eine Mehrzahl an Agenten gleich und dürfen nicht für einen einzelnen Agenten geändert werden. Beispiele hierfür sind Kommunikationsprotokollparameter, Identifikationsdaten, Authentisierungsdaten, Authorisierungsdaten oder Routingkonfigurationen für zu versendende Notifikationen. Derartige Konfigurationsdaten werden in der Regel selten geändert. Die gemeinsamen Daten sind unabhängig von anderen Daten. Wenn gemeinsame Daten geändert werden, muss sichergestellt werden, dass alle Agenten, welche die gemeinsamen Daten gespeichert haben, die Werte ändern.
- Agenten-spezifische Daten: diese Daten können von Agent zu Agent unterschiedliche Werte aufweisen. Es existieren die beiden Unterklassen unabhängige agenten-spezifische Daten und abhängige agenten-spezifische Daten.
   o Unabhängige agenten-spezifische Daten: Diese Daten sind nur für einzelne Agenten von Bedeutung und können daher unabhängig von der Konfiguration der anderen Agenten geändert werden. Typische Beispiele hierfür sind die Daten der Hardware-Konfiguration eines Agenten und Konfigurationsdaten bezüglich der internen Funktionen und Verknüpfungen eines Agenten. Manche der unabhängigen agenten-spezifische Daten können unter Verwendung von Templates gehandhabt werden, in diesem Fall existieren Default-Werte. Die Konfigurationsdaten aller Agenten weisen üblicherweise die Default-Werte auf. Es ist jedoch möglich, dass die Konfigurationsdaten für einzelne Agenten in Abweichung von den Default-Werten geändert werden. Die Templates sind den gemeinsamen Daten ähnlich, jedoch mit dem Unterschied, dass die Templates bei Bedarf für einzelne Agenten geändert werden können.
   o Abhängige agenten-spezifische Daten: Werden abhängige agenten-spezifische Daten in Bezug auf einen Agenten geändert, so folgt daraus, dass Änderungen von Konfigurationsdaten anderer Agenten nötig sind, um die Datenkonsistenz im Managementsystem zu gewährleisten. Typische Beispiele für abhängige agenten-spezifische Daten sind Transportplanungsdaten, wie z.B. IP-Adressen und Netzwerkmasken, Namen, Positionen, Identifikationsinformationen, öffentliche Schlüssel, Interoperabilitätsinformationen, Typen- und Versionsangaben von Agenten. Bei der Änderung eines abhängigen agenten-spezifische Datums müssen Änderungen im gesamten Managementnetz oder zumindest in einem Teil des Managementnetzes erfolgen.

Um die verschiedenen Klassen von Konfigurationsdaten beim Datenmanagement zu berücksichtigen, werden relationale Datenbanken eingesetzt. Für jede Objektklasse (MOC: Managed Object Class) existiert eine eigene Tabelle. Bei einer Objektklasse handelt es sich um die Abstraktion einer funktionalen oder hardwarebezogenen Ressource des Kommunikationssystems gemäß einer objektorientierten Modellierung. Jeder Objektklasse werden eine oder mehrere Instanzen zugeordnet. Ein Agent stellt dementsprechend eine bestimme Instanz einer bestimmten Objektklasse dar. Die Spalten einer Tabelle einer Objektklasse entsprechen den Attributen der Objektklasse, die Zeilen entsprechen den der Objektklasse zugeordneten Instanzen. Wird z.B. eine bestimmte Objektklasse betrachtet, welche zwei Attribute aufweist, so steht in der zu einer bestimmten Instanz gehörigen Zeile der Tabelle in der ersten Spalte eine Identifikationsinformation der Instanz, in der zweiten Spalte der Wert des ersten Attributs in Bezug auf die Instanz, und in der dritten Spalte der Wert des zweiten Attributs in Bezug auf die Instanz. Jede Tabelle einer Objektklasse weist eine Identifikationsidentifikation auf. Auf diese Weise kann jede Tabelle einer Objektklasse auf eine oder mehrere Tabellen von anderen Objektklassen verweisen, womit eine Verknüpfung zwischen den verschiedenen Tabellen besteht.

Weiterhin existiert jeweils eine Tabelle für die gemeinsamen Daten und für die Template-Daten. Diese Tabellen weisen jeweils eine Spalte für jedes Attribut auf, welches als gemeinsames Datum bzw. Template-Datum klassifiziert ist. Die Tabelle der gemeinsamen Daten weist lediglich eine Zeile auf, in welcher die Werte für die als gemeinsames Datum klassifizierten Attribute eingetragen sind. Die Tabelle der Template-Daten weist eine Zeile auf, in welcher die Werte für die als Template-Datum klassifizierten Attribute gemäß dem jeweiligen Default-Wert eingetragen sind. Weiterhin weist die Tabelle der Template-Daten Zeilen auf für die geänderten Werte der Template-Daten von Instanzen. In diesen Zeilen ist jeweils die Identifikationsinformation der jeweiligen Instanz, auf welche sich die von den Default-Werten abweichenden Template-Daten beziehen, in einer Spalte eingetragen.

Die Datenbank MASTER des Managers EM umfasst die vollständigen Tabellen für jede Objektklasse, sowie die vollständige Tabelle für die gemeinsamen Daten und die Template-Daten. In Bezug auf einen Agenten ist es grundsätzlich ausreichend, wenn seine Datenbank REPLICA die ihn betreffende Zeile der Tabelle seiner Objektklasse umfasst, sowie gegebenenfalls eine ihn betreffende Zeile der Tabelle der Template-Daten, wenn seine Konfigurationsdaten von den Default-Werten abweichen. Es ist jedoch möglich, dass ein Agent in seiner Datenbank REPLICA weitere Daten speichert. Dies kann sich z.B. in Bezug auf die Ausfallsicherheit als vorteilhaft erweisen; die betreffenden Daten können dann z.B. bei einem Ausfall einer Kommunikation zwischen einem weiteren Agenten und dem Manager EM von dem betreffenden Agenten, welcher ihn nicht betreffende Daten speichert, abgefragt werden. Dem Manager EM ist bekannt, welche Daten von der jeweiligen Datenbank REPLICA der Agenten gespeichert werden.

Die Verwendung der Tabellen für gemeinsame Daten und Template-Daten reduziert das Volumen der zu speichernden Daten und somit die Anforderungen an die Speicherkapazität des Managers EM. Denn die gemeinsamen Daten müssen von dem Manager EM lediglich einmal in Form der Tabelle der gemeinsamen Daten gespeichert werden, und nicht in Bezug auf jeden Agenten einzeln. Gleiches gilt auch für die Template-Daten, wobei bei den Template-Daten zusätzlich eine Speicherung von agentenspezifischen Werten erfolgt, wenn Konfigurationsdaten eines Agent von den Default-Werten abweichen.

Von dem Manager EM werden Trigger und Prozeduren gespeichert, welche mit Einträgen der Datenbank MASTER verknüpft sind. Die Trigger und Prozeduren ermöglichen es, unter Verwendung der beschriebenen Klassifizierung der Daten konsistente Daten im gesamten Managementsystem zu haben. Für den Datenabgleich werden die oben beschriebenen Verfahrensschritte des Master-Replica-Mechanismus eingesetzt. Teilt beispielsweise der Agent NE dem Manager EM mit, dass er eine Änderung in seiner Datenbank REPLICA vorgenommen hat, wobei sich die Änderung auf ein abhängiges agenten-spezifische Datum bezieht, können die Trigger und Prozeduren bewirken, dass der Manager EM automatisch alle anderen Agenten, welche von der veränderten Größe abhängige Daten speichern, auffordert, die erforderliche Anpassung vorzunehmen. Bei Veränderung eines unabhängigen agenten-spezifische Datums beispielsweise bewirken die Trigger und Prozeduren, dass die gleiche Veränderung in allen Datenbanken REPLICA erfolgen, welche dieses Datum umfassen. Wird ein Wert der Tabelle der gemeinsamen Daten oder der Template-Daten geändert, so wird die Anweisung zur Änderung von dem Manager EM an alle Einrichtungen gesendet, welche in ihrer Replica-Datenbank die Tabelle der gemeinsamen Daten oder der Template-Daten speichern. Grundsätzlich gilt, dass der Manager EM, bevor er einen Agenten dazu auffordert, eine Veränderung in seiner Datenbank REPLICA vorzunehmen, eine Konsistenzprüfung vornimmt, um zu detektieren, ob die von ihm gewünschten Änderungen mit den restlichen Daten vereinbar sind.

Die Kombination der Klassifizierung der Daten gemäß ihrer Interdependenzen mit dem Datenmanagement eines Master-Replica-Verfahrens unterstützt das Konfigurationsmanagement in besonders vorteilhafter Weise. Die Berücksichtigung der Interdependenzen ermöglicht es auf einfache Weise, die im Managementsystem gespeicherten Daten konsistent zueinander zu halten.

## Patentansprüche

1. Verfahren zum Betreiben eines hierarchischen Managementsystems, bei dem
das Managementsystem zumindest einen Manager (EM) und einen Agenten (NE) umfasst,
der Manager (EM) und der Agent (NE) Konfigurationsinformationen in jeweils einer Datenbank (MASTER, REPLICA) speichern,
**dadurch gekennzeichnet,**
**dass** der Agent (NE) eine Änderung in seiner Datenbank (REPLICA) durchführt (TENTATIVE COMMIT) und dem Manager (EM) eine Nachricht (CHANGE 1) mit Informationen über die durchgeführte Änderung sendet,
der Manager (EM) dem Agenten (NE) eine Nachricht (CHANGE OK 1, CHANGE NOT OK 1) mit einer positiven oder negativen Rückmeldung hinsichtlich der Änderung sendet,
der Agent (NE) in seiner Datenbank (REPLICA) die Änderung nach Empfang einer positiven Rückmeldung des Managers (EM) beibehält (COMMIT) und nach Empfang einer negativen Rückmeldung zurücksetzt (CHANGE BACK).

2. Verfahren nach Anspruch 1, **dadurch** g e k e n n z e i c h - net,
dass der Manager (EM) nach Empfang der Nachricht (CHANGE 1) mit Informationen über die durchgeführte Änderung bei Versendung einer positiven Rückmeldung die Änderung in seiner Datenbank (MASTER) durchführt (COMMIT).

3. Verfahren nach Anspruch 2, **dadurch gekennzeichnet,**
**dass** sich die positive Rückmeldung des Managers (EM) lediglich auf einen Teil der Änderung bezieht, und
der Agent (NE) in seiner Datenbank (REPLICA) nach Empfang der positiven Rückmeldung den Teil der Änderung beibehält (COMMIT) und den restlichen Teil der Änderung zurücksetzt (CHANGE BACK), und
der Manager (EM) bei Versendung der positiven Rückmeldung lediglich den Teil der Änderung in seiner Datenbank (MASTER) durchführt (COMMIT).

4. Verfahren nach einem der Ansprüche 1 bis 3, **dadurch gekennzeichnet,**
**dass** der Agent (NE) Informationen über den vor der Änderung vorliegenden Zustand seiner Datenbank (REPLICA) speichert.

5. Verfahren nach einem der Ansprüche 1 bis 4, **dadurch gekennzeichnet,**
**dass** die Informationen über die Änderung sich ausschließlich auf von der Änderung betroffene Teile der Datenbank (REPLICA) des Agenten (NE) beziehen.

6. Verfahren nach einem der Ansprüche 1 bis 5, **dadurch gekennzeichnet,**
**dass** der Agent (NE) die Nachricht (CHANGE 1) mit Informationen über die Änderung sendet: unmittelbar nach der Durchführung der Änderung, oder
nach einer Wiederherstellung der Verbindung zwischen dem Manager (EM) und dem Agent (NE), oder
nach dem Ablauf einer bestimmten Zeitspanne.

7. Verfahren zum Betreiben eines hierarchischen Managementsystems, bei dem
das Managementsystem zumindest einen Manager (EM) und einen Agenten (NE) umfasst,
der Manager (EM) und der Agent (NE) Konfigurationsinformationen in jeweils einer Datenbank (MASTER, REPLICA) speichern,
**dadurch gekennzeichnet,**
**dass** der Manager (EM) dem Agenten (NE) eine Nachricht (CHANGE 2) mit Informationen über eine in der Datenbank (REPLICA) des Agenten (NE) durchzuführende Änderung sendet,
der Agent (NE) dem Manager (EM) eine Nachricht (CHANGE OK 2, CHANGE NOT OK 2) mit einer positiven oder negativen Rückmeldung hinsichtlich der Durchführung der Änderung sendet,
der Manager (EM) nach Empfang einer positiven Rückmeldung die Änderung in seiner Datenbank (MASTER) durchführt (COMMIT).

8. Verfahren nach Anspruch 7, **dadurch** g e k e n n z e i c h - net,
dass sich die positive Rückmeldung des Agenten (NE) lediglich auf einen Teil der Änderung bezieht und der Manager (EM) nach Empfang der positiven Rückmeldung lediglich den von dem Agenten (NE) durchgeführten Teil der Änderung in seiner Datenbank (MASTER) durchführt (COMMIT).

9. Verfahren nach Anspruch 7 oder 8, **dadurch gekennzeichnet,**
**dass** die Informationen über die durchzuführende Änderung sich ausschließlich auf von der Änderung betroffene Teile der Datenbank (REPLICA) des Agenten (NE) beziehen.

10. Verfahren nach einem der Ansprüche 1 bis 6 und einem der Ansprüche 7 bis 9.

11. Verfahren nach einem der Ansprüche 1 bis 10, **dadurch gekennzeichnet,**
**dass** es sich um ein Master-Replica-Verfahren handelt.

12. Verfahren nach einem der Ansprüche 1 bis 11, **dadurch gekennzeichnet,**
**dass** es sich der Durchführung von Änderungen in der Datenbank (MASTER) des Managers (EM) und/oder des Agenten (NE) jeweils um eine Transaktion handelt.

13. Verfahren nach einem der Ansprüche 1 bis 12, **dadurch gekennzeichnet,**
**dass** der Manager (EM) und der Agent (NE) jeweils einen ersten Bestandteil (MANAGER, AGENT) und einen zweiten Bestandteil (MASTER, REPLICA) umfassen, wobei
der erste Bestandteil (MANAGER, AGENT) zuständig für die Durchführung von Netzwerkmanagementfunktionen und unabhängig von Datenabgleichsfunktionen ist, und
der zweite Bestandteil (MASTER, REPLICA) zuständig für die Durchführung von Datenabgleichsfunktionen und unabhängig von Netzwerkmanagementfunktionen ist.

14. Verfahren nach einem der Ansprüche 1 bis 13, **dadurch gekennzeichnet,**
**dass** das Verfahren in Bezug auf eine Mehrzahl von Agenten (NE) durchgeführt wird.

15. Verfahren nach Anspruch 14, **dadurch** g e k e n n z e i c h - net,
dass die Datenbank (MASTER) des Managers (EM) eine Verknüpfung zwischen ersten Konfigurationsinformationen und zweiten Konfigurationsinformationen aufweist, und
dass der Manager (EM) eine Nachricht (CHANGE 1) mit Informationen über eine Änderung der ersten Konfigurationsinformationen von einem ersten Agent (NE) empfängt oder eine Nachricht (CHANGE 2) mit Informationen über eine durchzuführende Änderung betreffend die ersten Konfigurationsinformationen an den ersten Agenten (NE) sendet, und aufgrund der Verknüpfung eine Nachricht (CHANGE 2) mit Informationen über eine durchzuführende Änderung betreffend die zweiten Konfigurationsinformationen an einen zweiten Agenten (NE) sendet.

16. Manager (EM) für ein hierarchisches Managementsystem, welches neben dem Manager (EM) zumindest einen Agenten (NE) umfasst,
mit einer Datenbank (MASTER) zum Speichern von Konfigurationsinformationen,
**gekennzeichnet durch**
Mittel zum Empfangen und Verarbeiten einer Nachricht (CHANGE 1) von dem Agent (NE) mit Informationen über eine in einer Datenbank (REPLICA) des Agenten (NE) zum Speichern von Konfigurationsinformationen durchgeführte Änderung,
Mittel zum Erstellen und Versenden einer Nachricht (CHANGE OK 1, CHANGE NOT OK 1) an den Agent (NE) mit einer positiven oder negativen Rückmeldung hinsichtlich der Änderung,
Mittel zum Durchführen der Änderung in der Datenbank (MASTER) des Managers (EM) bei Versendung einer positiven Rückmeldung.

17. Agent (NE) für ein hierarchisches Managementsystem, welches neben dem Agent (NE) zumindest einen Manager (EM) umfasst,
mit einer Datenbank (REPLICA) zum Speichern von Konfigurationsinformationen,
**gekennzeichnet durch**
Mittel zum Erstellen und Versenden einer Nachricht (CHANGE 1) an den Manager (EM) mit Informationen über eine in der Datenbank (REPLICA) durchgeführte Änderung, Mittel zum Empfangen und Verarbeiten einer Nachricht (CHANGE OK 1, CHANGE NOT OK 1) von dem Manager (EM) mit einer positiven oder negativen Rückmeldung hinsichtlich der Änderung,
Mittel zum Beibehalten der Änderung nach Empfang einer positiven Rückmeldung des Managers (EM) und zum Zurücksetzen der Änderung nach Empfang einer negativen Rückmeldung des Managers (EM).

18. Manager (EM) für ein hierarchisches Managementsystem, welches neben dem Manager (EM) zumindest einen Agenten (NE) umfasst,
mit einer Datenbank (MASTER) zum Speichern von Konfigurationsinformationen,
**gekennzeichnet durch**
Mittel zum Erstellen und Versenden einer Nachricht (CHANGE 2) an den Agenten (NE) mit Informationen über eine in einer Datenbank (REPLICA) des Agenten (NE) zum Speichern von Konfigurationsinformationen durchzuführende Änderung,
Mittel zum Empfangen und Verarbeiten einer Nachricht (CHANGE OK 2, CHANGE NOT OK 2) von dem Agent (NE) mit einer positiven oder negativen Rückmeldung hinsichtlich der Durchführung der Änderung,
Mittel zum Durchführen der Änderung in der Datenbank (MASTER) des Managers (EM) nach Empfang einer positiven Rückmeldung.

19. Agent (NE) für ein hierarchisches Managementsystem, welches neben dem Agent (NE) zumindest einen Manager (EM) umfasst,
mit einer Datenbank (REPLICA) zum Speichern von Konfigurationsinformationen,
**gekennzeichnet durch**
Mittel zum Empfangen und Verarbeiten einer Nachricht (CHANGE 2) von dem Manager (EM) mit Informationen über eine in der Datenbank (REPLICA) des Agenten (NE) durchzuführende Änderung,
Mittel zum Erstellen und Versenden einer Nachricht (CHANGE OK 2, CHANGE NOT OK 2) an den Manager (EM) mit einer positiven oder negativen Rückmeldung hinsichtlich der Durchführung der Änderung.
